# EUROPEAN PATENT APPLICATION

(11) **EP 3 893 167 A1**
(43) Date of publication of application: **13.10.2021**
(21) Application number: 20168256.4
(22) Date of filing: 06.04.2020
(51) Int. Cl.: G06N 3/08, G06N 3/04, G06K 9/62, G06K 9/00

(54) **SELECTING A DATA SAMPLE FOR TRAINING OF A NEURAL NETWORK**

(71) Applicant: Bayerische Motoren Werke Aktiengesellschaft, 80809 München (DE)
(72) Inventor: Schmidt, Sebastian, 81925 München (DE); Rao, Qing, 80335 München (DE)

(57) **Abstract**

One aspect of the invention describes a method for selecting a data sample for training of a neural network. One step of the method is Detecting at least one first object in a first data sample using a first neural network, comprising Detecting at least one second object in a second data sample using the first neural network, or Detecting at least one third object in the first data sample using at least one second neural network. Another step of the method is Matching the at least one first object with the at least one second object, respectively Matching the at least one first object with the at least one third object. Another step of the method is Determining the variance of the matched at least one first object and the matched at least one second object, respectively of the matched at least one first object and the matched at least one third object. Another step of the method is Selecting the first data sample depending on the determined variance.

## Description

This invention relates to a method for selecting a data sample for training of a neural network.

An automated vehicle is a vehicle with automated longitudinal guidance and/or automated lateral guidance. The term "automated vehicle" also comprises an autonomous vehicle. The term "automated vehicle" comprises in particular a vehicle with an arbitrary level of automation, for example the levels of automation that are defined in the standard SAE J3016 (SAE - Society of Automotive Engineering):
Level 0: Automated system issues warnings and may momentarily intervene but has no sustained vehicle control.
Level 1 ("hands on"): The driver and the automated system share control of the vehicle. Examples are Adaptive Cruise Control (ACC), where the driver controls steering and the automated system controls speed; and Parking Assistance, where steering is automated while speed is under manual control. The driver must be ready to retake full control at any time. Lane Keeping Assistance (LKA) Type II is a further example of level 1 self-driving.
Level 2 ("hands off"): The automated system takes full control of the vehicle (accelerating, braking, and steering). The driver must monitor the driving and be prepared to intervene immediately at any time if the automated system fails to respond properly. The shorthand "hands off" is not meant to be taken literally. In fact, contact between hand and wheel is often mandatory during SAE 2 driving, to confirm that the driver is ready to intervene.
Level 3 ("eyes off"): The driver can safely turn their attention away from the driving tasks, e.g. the driver can text or watch a movie. The vehicle will handle situations that call for an immediate response, like emergency braking. The driver must still be prepared to intervene within some limited time, specified by the manufacturer, when called upon by the vehicle to do so.
Level 4 ("mind off"): As level 3, but no driver attention is ever required for safety, i.e. the driver may safely go to sleep or leave the driver's seat. Self-driving is supported only in limited spatial areas (geofenced) or under special circumstances, like traffic jams. Outside of these areas or circumstances, the vehicle must be able to safely abort the trip, i.e. park the car, if the driver does not retake control.
Level 5 ("steering wheel optional"): No human intervention is required at all. An example would be a robotic taxi.

Automated vehicles must be able to perceive and understand their surroundings. Deep learning based approaches promise to solve the perception problem but require a large amount of manually labeled training data.

Active learning is a training procedure during which the model itself selects interesting samples for labeling based on their uncertainty, with substantially less data required for training. Recent research in active learning is mostly focused on the simple image classification task.

However, simple image classification is not sufficient for automated vehicles, because it only answers the Boolean question, if an object of a certain class has been detected. On top of that, an automated vehicle requires the additional information where the object has been detected, which combines classification and localization of the objects, where multiple objects can occur in one sample/image.

The purpose of the invention is to reduce the required amount of data for the training process of neural networks for object detection.

One aspect of the invention relates to a method, in particular a computer-implemented method for selecting a data sample for training of a neural network.

The data sample is for example an image captured by a camera or sensor data captured by lidar or sensor data captured by any other sensor.

Said (artificial) neural networks are computing systems vaguely inspired by the biological neural networks that constitute animal brains. Such systems "learn" to perform tasks by considering examples, generally without being programmed with any task-specific rules. For example, in image recognition, they might learn to identify images that contain cats by analyzing example images that have been manually labeled as "cat" or "no cat" and using the results to identify cats in other images. They do this without any prior knowledge about cats, e.g., that they have fur, tails, whiskers and cat-like faces. Instead, they automatically generate identifying characteristics from the learning material that they process.

An artificial neural network is based on a collection of connected units or nodes called artificial neurons which loosely model the neurons in a biological brain. Each connection, like the synapses in a biological brain, can transmit a signal from one artificial neuron to another. An artificial neuron that receives a signal can process it and then signal additional artificial neurons connected to it.

In common artificial neural network implementations, the signal at a connection between artificial neurons is a real number, and the output of each artificial neuron is computed by some non-linear function of the sum of its inputs. The connections between artificial neurons are called "synapses". Artificial neurons and synapses typically have a weight that adjusts as learning proceeds. The weight increases or decreases the strength of the signal at a connection. Artificial neurons may have a threshold such that the signal is only sent if the aggregate signal crosses that threshold. Typically, artificial neurons are aggregated into layers. Different layers may perform different kinds of transformations on their inputs. Signals travel from the first layer (the input layer), to the last layer (the output layer), possibly after traversing the layers multiple times.

The original goal of the artificial neural network approach was to solve problems in the same way that a human brain would. However, over time, attention moved to performing specific tasks, leading to deviations from biology. Artificial neural networks have been used on a variety of tasks, including computer vision, speech recognition, machine translation, social network filtering, playing board and video games and medical diagnosis.

In computer vision, known tasks for artificial neural networks are for example classification and object detection. Classification is a process related to categorization, the process in which ideas and objects are recognized, differentiated and understood. In machine learning and statistics, classification is the problem of identifying to which of a set of categories (subpopulations) a new observation belongs, on the basis of a training set of data containing observations (or instances) whose category membership is known. Object detection is a computer technology related to computer vision and image processing that deals with detecting instances of semantic objects of a certain class (such as humans, buildings, or cars) in digital images and videos.

A first step of the method is Detecting at least one first object in a first data sample using a first neural network. This step comprises the steps of Detecting at least one second object in a second data sample using the first neural network, or of Detecting at least one third object in the first data sample using at least one second neural network.

In particular, the first of the method is Detecting at least two first objects in a first data sample using a first neural network. This step comprises the steps of Detecting at least two second objects in a second data sample using the first neural network, or of Detecting at least two third objects in the first data sample using at least one second neural network.

For example, the first of the method is Detecting at least two first objects in a first data sample using a first neural network. This step comprises the steps of Detecting at least two second objects in a second data sample using the first neural network, or of Detecting at least two third objects in the first data sample using at least two second neural networks.

The common idea behind these two alternatives is that a data sample is suitable for training the neural network if the data sample contains a high level of stochastic variance. With other words: if it is hard for the neural network to detect the at least one object in the first data sample, then the first data sample is suitable for training. The stochastic variance can either be determined by processing two temporally correlated data sample by the same neural network or by processing one data sample by at least two diverse neural networks. The at least two neural networks may for example have the same structure but may be initialized with different weights.

Another step of the method is Matching the at least one first object with the at least one second object, respectively Matching the at least one first object with the at least one third object.

Matching is the process of correlating the at least one first object with the at least one second object, respectively of correlating the at least one first object with the at least one third object, wherein correlating means that the at least one first object in the first data sample is actually the at least one second object in the second data sample, respectively the at least one first object in the first data sample is actually the at least one third object in the first data sample.

The matching can be performed by comparing each of the at least first one object with each of the at least one second object, respectively by comparing each of the at least first one object with each of the at least one third object.

This comparison can for example be performed using the intersection-over-union metric.

The intersection over union metric is a ratio. The numerator is the area of overlap between the objects to be compared. Especially the numerator is the area of overlap between bounding boxes of the objects to be compared.

The denominator is the area of union, or more simply, the area encompassed by both the objects. Especially the denominator is the area encompassed by the bounding boxes of both objects.

Dividing the area of overlap by the area of union yields the intersection over union score.

So the at least one first object and the at least one second object, which possess the highest intersection over union score can be matched. Respectively the at least one first object and the at least one third object, which possess the highest intersection over union score can be matched.

Another step of the method is Determining the variance of the matched at least one first object and the matched at least one second object, respectively Determining the variance of the matched at least one first object and the matched at least one third object.

The term variance in this document means a distribution of the output.

Another step of the method is Selecting the first data sample depending on the determined variance.

Even if two alternatives are described above, the invention has one single general concept, which is the idea of matching objects to exploit variance in object matching methods to select favorable data samples for training of a neural network.

In a preferred embodiment of the invention, the first data sample and second data sample are images, in particularly the first data sample and second data sample are images acquired by a camera of an automated vehicle.

In another preferred embodiment of the invention, the first data sample and the second data sample were acquired chronologically by the same sensor, in particular by a camera of an automated vehicle. Chronologically means that the sensor first acquired the first data sample and after a certain amount of time acquires the second data sample. This certain amount of time is in particular very short, for example 100 ms, 1s, 2s, 3s, 4s, or 5s.

In another preferred embodiment of the invention, Detecting at least one object comprises the steps of, wherein Detecting at least one object means detecting at least one first object, detecting at least one second object and/or detecting at least one third object:
- Detecting a position of the at least one object in the corresponding data sample. The position of the at least one object is for example a position of the at least one object relative to the corresponding data sample or a position of a bounding box of the at least one object relative to the corresponding data sample. The corresponding data sample is the first data sample for the at least one first object and the at least one third object. The corresponding data sample is the second data sample for the at least one second object.
- Determining a class of the at least one object. This step can be performed by conventional classification methods.

In another preferred embodiment of the invention, Matching the at least one first object with the at least one second object, respectively Matching the at least one first object with the at least one third object comprises the steps of:
- Comparing the position of the at least one first object with the position of the at least one second object, respectively Comparing the position of the at least one first object with the position of the at least one third object, for example using the intersection over union metric.
- Matching the at least one first object with the at least one second object depending on the comparison, respectively Matching the at least one first object with the at least one third object depending on the comparison. For example, those respective objects having the highest intersection over union metric are matched.

In another preferred embodiment of the invention Determining the variance of the matched at least one first object and the matched at least one second object, respectively Determining the variance of the matched at least one first object and the matched at least one third object comprises the step of:
- Determining the variance of the class of the matched at least one first object and the matched at least one second object, respectively Determining the variance of the matched at least one first object and the matched at least one third object. The variance of the class of an object can for example be determined by evaluation of the probabilities of the conventional classification methods.

In another preferred embodiment of the invention, the number of at least one first object, the number of at least one second object and the number of least one third object is the same, in particular the number of at least one first object, the number of at least one second object and the number of least one third object is at least 10 respectively.

In another preferred embodiment of the invention, the step of Detecting at least one third object in the first data sample (ds1) using at least one second neural network comprises the step of:
- Detecting at least one third object in the first data sample using at least two second neural networks, wherein each of the at least two second neural networks is configured to respectively detect at least one third object in the first data sample.

In another preferred embodiment of the invention, Selecting the first data sample depending on the determined variance comprises the step of:
- Selecting the first data sample, if the determined variance exceeds a threshold.

For a better understanding of the present invention, and to show how the same may be carried into effect, reference will now be made, by way of example, to the accompanying drawing, in which:
- Fig. 1: shows the generic principle of active learning,
- Fig. 2: shows an embodiment of the invention, and
- Fig. 3: shows another embodiment of the invention.

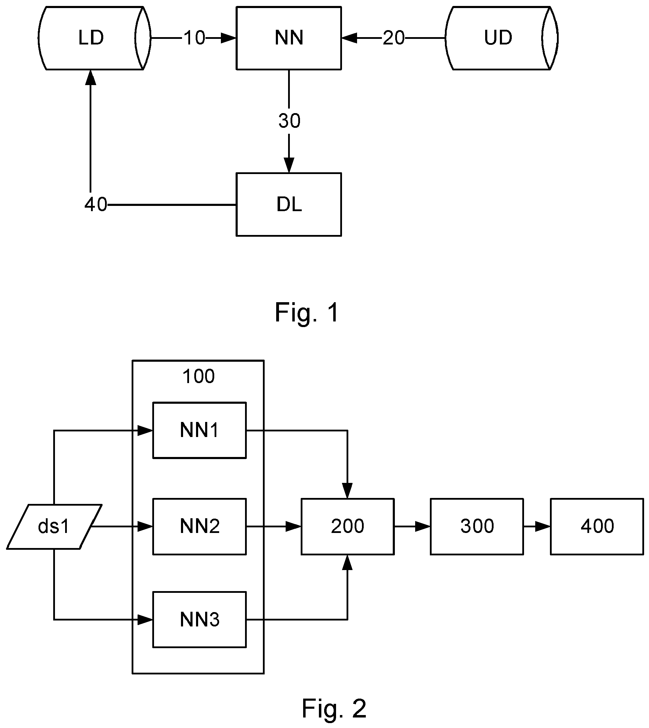

Fig 1 shows the generic principle of active learning. A neural network NN uses samples of labeled data LD for training 10. The neural network NN then selects 20 samples of unlabeled data UD from which it expects the best training progress. The neural network then sends 30 these selected samples of unlabeled data to da data labeler DL. The data labeler DL labels these samples of unlabeled data and puts 40 them into the pool of labeled data LD, from which the neural network NN then again uses samples for training.

Fig. 2 shows a first embodiment of the invention.

Fig. 2 shows a method for selecting a data sample ds1 for training of a neural network NN1, NN2, NN3.

One step of the method is Detecting 100 at least one first object in a first data sample ds1 using a first neural network NN1, and Detecting 120 at least one third object in the first data sample ds1 using two second neural networks NN2, NN3.

The first data sample ds1 is in particular an image acquired by a camera of an automated vehicle.

Detecting 100 at least one first object in a first data sample ds1 and Detecting 120 at least one third object in the first data sample ds 1 each comprises the steps of detecting a position of the at least one object in the corresponding data sample ds1, ds2, and determining a class of the at least one object.

Another step of the method is Matching 200 the at least one first object with the at least one third object detected by each of the two second neural networks NN2, NN3.

Matching 200 the at least one first object with the at least one third object comprises the steps comparing the position of the at least one first object with the position of the at least one third object, and matching the at least one first object with the at least one third object depending on the comparison.

Another step of the method is Determining 300 the variance of the matched at least one first object and the matched at least one third object detected by each of the two second neural networks NN2, NN3.

Determining 300 the variance of the matched at least one first object and the matched at least one third object comprises the step of determining the variance of the matched at least one first object and the matched at least one third object.

Another step of the method is Selecting 400 the first data sample ds1 depending on the determined variance.

Selecting 400 the first data sample ds1 depending on the determined variance comprises the step of selecting the first data sample ds1, if the determined variance exceeds a threshold.

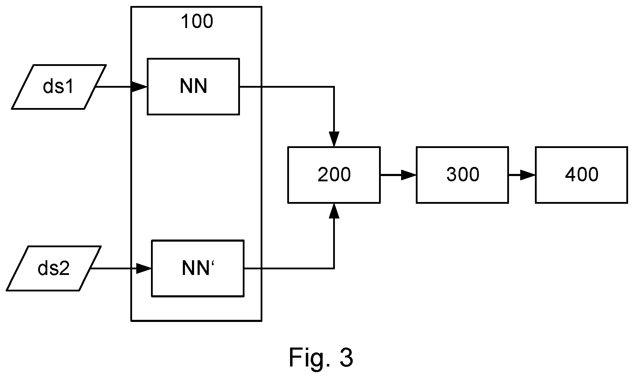

Fig. 3 shows a second embodiment of the invention.

Fig. 3 shows a method for selecting a data sample ds1, ds2 for training of a neural network NN, NN', wherein NN and NN' are the same neural network, which is used to process two different data samples ds1, ds2.

The first data sample ds1 and second data sample ds2 are images which were acquired chronologically by the same sensor, in particular by the same camera of an automated vehicle.

One step of the method is Detecting 100 at least one first object in a first data sample ds1 using a first neural network NN, and Detecting 110 at least one second object in a second data sample ds2 using the first neural network NN'.

Detecting 100 at least one first object and Detecting 110 of at least one second object each comprises the steps of detecting a position of the at least one object in the corresponding data sample ds1, ds2, and Determining a class of the at least one object.

Another step of the method is Matching 200 the at least one first object with the at least one second object.

Matching 200 the at least one first object with the at least one second object comprises the steps of comparing the position of the at least one first object with the position of the at least one second object, and matching the at least one first object with the at least one second object depending on the comparison.

Another step of the method is Determining 300 the variance of the matched at least one first object and the matched at least one second object.

Determining 300 the variance of the matched at least one first object and the matched at least one second object comprises the step of determining the variance of the class of the matched at least one first object and the matched at least one second object.

Another step of the method is Selecting 400 the first data sample ds1 depending on the determined variance.

Selecting 400 the first data sample ds1 depending on the determined variance comprises the step of selecting the first data sample ds1, if the determined variance exceeds a threshold, in particular a threshold regarding an uncertainty metric.

## Claims

1. A method for selecting a data sample (ds1, ds2) for training of a neural network (NN, NN', NN1, NN2, NN3), with the method comprising the steps of:
• Detecting (100) at least one first object in a first data sample (ds1) using a first neural network (NN, NN1),
• Detecting (110) at least one second object in a second data sample (ds2) using the first neural network (NN'), or
• Detecting (120) at least one third object in the first data sample (ds1) using at least one second neural network (NN2, NN3), and
• Matching (200) the at least one first object with the at least one second object, respectively Matching (200) the at least one first object with the at least one third object,
• Determining (300) the variance of the matched at least one first object and the matched at least one second object, respectively Determining (300) the variance of the matched at least one first object and the matched at least one third object, and
• Selecting (400) the first data sample (ds1) depending on the determined variance.

2. A method according to claim 1, wherein the first data sample (ds1) and second data sample (ds2) are images.

3. A method according to any of the previous claims, wherein the first data sample (ds1) and the second data sample (ds2) were acquired chronologically by the same sensor.

4. A method according to any of the previous claims, wherein Detecting (100) at least one object comprises the steps of:
• Detecting a position of the at least one object in the corresponding data sample (ds1, ds2), and
• Determining a class of the at least one object.

5. A method according to claim 4, wherein Matching (200) the at least one first object with the at least one second object, respectively Matching (200) the at least one first object with the at least one third object comprises the steps of:
• Comparing the position of the at least one first object with the position of the at least one second object, respectively Comparing the position of the at least one first object with the position of the at least one third object,
• Matching the at least one first object with the at least one second object depending on the comparison, respectively Matching the at least one first object with the at least one third object depending on the comparison.

6. A method according to claim 4 or 5, wherein Determining (300) the variance of the matched at least one first object and the matched at least one second object, respectively Determining (300) the variance of the matched at least one first object and the matched at least one third object comprises the step of:
• Determining the variance of the class of the matched at least one first object and the matched at least one second object, respectively Determining the variance of the matched at least one first object and the matched at least one third object.

7. A method according to any of the previous claims, wherein the number of at least one first object, the number of at least one second object and the number of least one third object is the same.

8. A method according to claim 7, wherein the number of at least one first object, the number of at least one second object and the number of least one third object is at least 10 respectively.

9. A method according to any of the previous claims, wherein the step of Detecting (120) at least one third object in the first data sample (ds1) using at least one second neural network (NN2, NN3) comprises the step of:
• Detecting at least one third object in the first data sample (ds1) using at least two second neural networks (NN2, NN3), wherein each of the at least two second neural networks (NN2, NN3) is configured to respectively detect at least one third object in the first data sample (ds1).

10. A method according to any of the previous claims, wherein Selecting (400) the first data sample (ds1) depending on the determined variance comprises the step of:
• Selecting the first data sample (ds1), if the determined variance exceeds a threshold.
